# EUROPÄISCHE PATENTSCHRIFT

(11) **EP 2 422 613 B1**
(45) Veröffentlichungstag und Bekanntmachung des Hinweises auf die Patenterteilung: **04.03.2015**
(21) Anmeldenummer: 11169321.4
(22) Anmeldetag: 09.06.2011
(51) Int. Cl.: A01G 7/04

(54) **Verfahren zur Beizung**
Pickling method
Procédé de décapage

(30) Priorität: 27.08.2010 DE 102010035677
(43) Veröffentlichungstag der Anmeldung: 29.02.2012
(73) Patentinhaber: Simply Water GmbH, 93055 Regensburg (DE)
(72) Erfinder: Philipps, André, 93059 Regensburg (DE)
(74) Vertreter: Stolmár, Matthias

(56) Entgegenhaltungen:
- EP-A1- 2 281 457
- WO-A2-00/13482
- WO-A2-2008/101364
- JP-A- 6 279 217
- JP-A- 2002 335 764

## Beschreibung

Die vorliegende Erfindung betrifft ein Verfahren zur Verstärkung des Wachstums bei Pflanzen, das die Beaufschlagung eines Trägermediums auf Pflanzen und/oder Samen und/oder Knollen und/oder Keimlingen unter Bedingungen, die zur Verstärkung des Wachstums der Pflanze oder von aus den Pflanzensamen gewachsenen Pflanzen geeignet sind, umfasst.

Mittel zur Stärkung des Wachstums bei Pflanzen sind dem Stand der Technik bekannt. Es ist bekannt, dass Pflanzen auf natürliche Stressbedingungen, wie beispielsweise Kälte, Hitze, Trockenheit, Verwundung, Pathogenbefall (Viren, Bakterien, Pilze oder Insekten) etc., aber auch auf Herbizide mit spezifischen oder unspezifischen Abwehrmechanismen reagieren ( Pflanzenbiochemie, Seiten 393 - 462, Spektrum Akademischer Verlag, Heidelberg, Berlin, Oxford, Hans W. Heldt 1996 ). WO 00/13482 betrifft Bohnen sowie deren Kultivierung mit elektrolysiertem Wasser. WO 2008/101364 betrifft betrifft ein Pflanzenschutz - Verfahren mit in salzhaltigem Wasser elektrolytisch erzeugten oxidativen Radikalen und UV-C-Licht und die in eine motorisiertem Rücken oder Handspritze, oder andere Spritzentypen integrierte Technik zur Durchführung des Verfahrens. EP 2 281 457 A1 betrifft ein Verfahren zur physikalischen Pflanzen-Behandlung mittels elektrostatischer Ladung.

In Pflanzen sind zahlreiche Proteine und die sie kodierenden Gene bekannt, die an Abwehrreaktionen gegen abiotischen Stress (z.B. Kälte, Hitze, Trockenheit oder Salz) beteiligt sind. Diese gehören teilweise zu Signaltransduktionsketten (z.B. Transkriptionsfaktoren, Chenasen oder Phospatasen) oder bewirken eine physiologische Antwort der Pflanzenzelle (z.B. Ionentransport, Entgiftung reaktiver Sauerstoffspezies).

Es ist weiter bekannt, dass chemische Substanzen die Toleranz von Pflanzen gegen abiotischen Stress erhöhen können. Derartige Substanzen werden dabei entweder durch Saatgut-Beizen, durch Blattspritzung oder durch Bodenbehandlung appliziert. Auch Fungizide werden erfolgreich eingesetzt, siehe beispielsweise DE 3534948.

Im Stand der Technik stehen einige weitere Präparate zur Beizung bereit, die als Wirkstoffe beispielsweise Pencycuron, Mancozeb, Tolclofos-methyl, Flutolanil, Metalaxyl-M, Fluazinam, Kupferhydroxid, Benzoesäure, Pseudomonas fluorescens oder Bacillus subtilis enthalten. Allerdings sind die zur Verfiigung stehenden Beizmittel nicht sehr effizient in der Reduktion des Befalls der später aus den behandelten Pflanzen hervorgehenden Stauden: so beträgt die maximale Reduktion der befallenen Pflanzen im Vergleich gebeizter Pflanzen mit unbehandelten Pflanzen nicht mehr als 50 %. Pflanzenstärkungsmittel die eine bakterielle Formulierung aufweisen und damit im ökologischen Landbau zugelassen sind, sind außerdem häufig weniger effektiv.

Die Einführung neuer Produktionsverfahren beispielsweise im Kartoffelanbau ist durch eine Zunahme des Mechanisierungsgrades wie z.B. den Einsatz von Vollerntemaschinen gekennzeichnet. Dadurch werden Verletzungen der Kartoffelknollen verstärkt verursacht, die Eintrittspforten für verschiedene Schaderreger sein können. In diesem Zusammenhang wird ein verstärktes Auftreten von Lagerfäulen beobachtet, so dass die Verbesserung der Knollenqualität, insbesondere bei Kartoffeln, auch weiterhin eine große wirtschaftliche Bedeutung hat. Bei der Beizung von Kartoffeln gegenüber pilzlichen oder bakteriellen Schaderregern wird im Stand der Technik lediglich ein Wirkungsgrad von 50 % - 70 % erreicht.

Hiervon ausgehend ist es Aufgabe der vorliegenden Erfindung, die beschriebenen Nachteile im Stand der Technik zu überwinden und ein verbessertes Verfahren zur Verstärkung des Wachstums bei Pflanzen bereitzustellen.

Gelöst wird diese Erfindung mit dem Merkmal des Patentanspruchs 1.

Bevorzugte Ausführungsformen und vorteilhafte Weiterentwicklungen sind Gegenstand der abhängigen Patentansprüche.

Die vorliegende Erfindung baut auf dem Stand der Technik dadurch auf, dass negativ geladenes Trägermedium oder eine Mischung von positiv und negativ geladenem Trägermedium beaufschlagt werden, oder in der Abfolge zunächst positiv geladenes Trägermedium, danach negatives und umgekehrt. Dadurch wird gegenüber dem Stand der Technik eine enorme Verbesserung erreicht. Überraschenderweise lassen sich beispielsweise manche phytopathogenen Pilze durch die Verwendung des erfindungsgemäßen Verfahrens bei der Verabreichung des Trägermediums auf Pflanzen und/oder Samen und/oder Knollen und/oder Keimlingen besser kontrollieren und bekämpfen als durch eine Spritzbehandlung bei Blattapplikationen. Das erfindungsgemäße Verfahren bewirkt eine erheblich verbesserte Reduktion von Pilzen und Sporen auf den Pflanzensamen bzw. der Pflanzenknollen vor dem Einsetzen derselben in den Boden. Gleichzeitig aber ist das Verfahren für die Umwelt unbedenklich. Das Verfahren zeigt keinerlei toxische Auswirkungen auf die Umgebung, auf Tiere und Pflanzen oder auf Verbraucher. Das eingesetzte Trägermedium weist oxididativ wirkende Verunreinigungen in einem so geringen Anteil auf, dass die Wirkung auf einem anderen Effekt beruhen muss. Es kann davon ausgegangen werden, dass die Wirkung des wie oben beschriebenen behandelten Wassers auf der Anregung des Wassermoleküls selbst beruht. Die Wassermoleküle befinden sich in einem Clusterverband, der sich aufgrund der elektrostatischen Dipolstruktur des Wassermoleküls ausbildet. Durch das Influenzverfahren werden Wassermoleküle elektrisch entladen und die erzeugten Ladungsträger im Clusterverband durch ständigen Austausch stabilisiert. Das derart elektrisch entladene Trägermedium kann daher desinfizierend wirken, da es imstande ist, Zellstrukturen zu denaturieren bzw. die Elektronentransportmechanismen von Mikroorganismen zu stören.

Dies ist einer der Gründe für die fehlende Resistenzbildung von Mikroorganismen oder Pilzen. Es wird angenommen, dass der zu beobachtende Effekt unter anderem auch darauf zurückzuführen ist, dass Mikroorganismen, die das Wachstum hemmen, durch das erfindungsgemäße Verfahren reduziert werden.

Darüber hinaus wird aber auch davon ausgegangen, dass durch die erfindungsgemäße Behandlung die Aufnahme von Wasser, Mineralien und weiteren Stoffen aus dem Boden in den Wurzelraum verbessert wird. Die Umwandlung der im Saatgut eingelagerten Stärke in Zucker wird angeregt sodass die Entwicklung der Pflanze verbessert wird.

Es hat sich als besonders vorteilhaft erwiesen, wenn das Medium mittels Influenzverfahren gewonnen wird. Das Influenzverfahren umfasst die folgenden Schritte: Einbringen des zu behandelnden Wassers in eine elektrisch beaufschlagte Zelle, Ausrichtung der Ladungen und freien Elektronen im elektrischen Feld, Trennung der Ladungen durch Bewegung und der daraus resultierender Influenz und Sammlung und Abführung der de-elektronisierten, positiv und/oder negativ geladenen Fraktion. Durch dieses Verfahren wird ein Trägermedium gewonnen, welches einen Elektronenmangel aufweist. Dies hat einen hohen Bedarf, die ungeladenen Positionen in den Clustern mit Elektronen zu füllen. Im Kontakt mit elektronenreichen Oberflächen gibt es einen elektrischen Schlag, der zum Ladungsausgleich führt.

Es konnte gezeigt werden, dass die Behandlung mit positiv und im Nachgang negativ geladenem Trägermedium die stärkste Steigerung des Pflanzenwuchses bewirkte. Es können aber je nach Beschaffenheit des Bodens als auch nach Art der zu behandelnden Pflanze positiv oder negativ geladene Trägermedien alleine oder auch in Mischungen eingesetzt werden.

Es hat sich als besonders vorteilhaft erwiesen, wenn die Behandlung mittels einer Beizung erfolgt. Zur Behandlung mittels einer Beizung kommen alle üblicherweise für die Beizung einsetzbaren Mischgeräte in Betracht. Im einzelnen geht man bei der Beizung so vor, dass man das Saatgut in einen Mischer gibt, die jeweils gewünschte Menge an Trägermedium entweder als solche oder nach vorherigem Vermischen mit weiteren Substanzen hinzufügt und bis zur gleichmäßigen Verteilung des Trägermediums auf dem Saatgut mischt. In vergleichbarer Weise kann eine Beizung bei Knollen wie beispielsweise Kartoffeln erfolgen. Bei der Behandlung von Knollen hat sich in vielen Fällen eine Behandlung in einem Bad als besonders vorteilhaft erwiesen, wobei die Knollen in dem Trägermedium eingelegt wurden, kurz drin verweilten und dann wieder herausgenommen wurden. Diese Vorgehensweise sichert eine schnelle und möglichst vollständige Behandlung der gesamten Oberfläche der Knollen. Das erfindungsgemäße Verfahren bzw. das dabei eingesetzte Trägermedium besitzt sehr gute fungizide Eigenschaften und lässt sich bei der Behandlung von Saatgut insbesondere zur Bekämpfung von phytopathogenen Pilzen wie Aszomycetis und Basidiomycetis einsetzen. Das erfindungsgemäße Verfahren bzw. das dabei eingesetzte Trägermedium eignet sich insbesondere bei der Behandlung von Saatgut oder Knollen zur Bekämpfung von Pyrenophora-, Rhizoctonia-, Tilletia- und Ustilago-Arten.

Darüber hinaus ist das Verfahren gemäß der Erfindung geeignet zur Bekämpfung von Erkrankungen durch die Erreger Phytophthora infestans (Braunfäule), Alternaria solani (Dürrflecken) und Botrytis cinerea (Grauschimmel).

Von besonderem Vorteil bei der Behandlung ist die Verwendung eines negativ geladenen Trägermediums. Dies kann zur Beizung wie auch zum base priming verwendet werden. Dabei umfasst der Begriff base priming die Behandlung der Knolle und/oder des Keimlings. Ein base priming mit Trägermedium gemäß der Erfindung bewirkt eine Leistungssteigerung, verbessert das Wurzelwachstum und die Wurzelleistung der Pflanzen, reduziert Schäden, die durch Trockenheit verursacht werden, bewirkt eine Qualitätsverbesserung der Knollen, und bewirkt eine gleichmäßigere Pflanzentwicklung. Positive Effekte waren in Parzellen mit höherem Trockenstress stärker ausgeprägt.

Darüber hinaus führt eine Behandlung mit einem Trägermedium, das mittels eines Influenzverfahrens erhältlich ist, zu gesünderen Stauden und mindert den Befall von Tochterknollen. In Versuchen führte eine Behandlung, als Beizung und/oder base priming, zu einer Verhinderung von 30% der Ernteausfälle durch die Wurzeltöterkrankheit (*Rhizoctonia solani*) und war damit effektiver als die marktüblichen Beizungen. Somit stellt die erfindungsgemäße Behandlung die einzige effiziente *Rhizoctonia-Beizung* im ökologischen Landbau dar.

Weiterhin konnte gezeigt werden, dass die Behandlung von Pflanzen mittels eines Trägermediums, das mittels eines Influenzverfahrens erhältlich ist, eine verbesserte Stresstoleranz und eine höhere physiologische Leistungsfähigkeit der Pflanzen bewirkt. In den untersuchten Kulturen bewirkte dies eine Ertragssteigerung und Verbesserung der Qualität.

Sowohl das negativ als auch das positiv geladene Trägermedium konnten als effiziente Mittel eingesetzt werden, sowohl im Labor wie auch in großtechnischen Versuchen. Insbesondere in Kulturen, die mit *Rhizoctonia solani* befallen waren, bewirkte dies eine Ertragssteigerung und Verbesserung der Qualität.

Im ökologischen bzw. biologischen Landbau kann diese Behandlung den Einsatz von Kupfer nahezu vollständig ersetzen. Während für die Beizung von Kartoffeln ein negatives Trägermedium besonders geeignet ist, sind für eine Desinfektion von Behältern und Kisten negative wie auch positive Trägermedien geeignet.

Als besonders vorteilhaft hat es sich erwiesen, wenn das positiv geladeneTrägermedium eine Gesamtkonzentration an entstandenen Oxidantien von weniger als 380, bevorzugt weniger als 100, besonders bevorzugt weniger als 50 und insbesondere bevorzugt weniger als 20 ppm aufweist, und das negativ geladene Trägermedium ein Konzentration an Natriumhydroxid zwischen 5 und 500 ppm, einen pH-Wert zwischen 9 und 12 und ein Elektronenübertragungspotential von - 800 +/- 300mV aufweist. Überraschenderweise konnte gezeigt werden, dass die vorteilhafte Wirkung des mittels Influenzverfahren gewonnenen Trägermediums auch dann erhalten bleibt, wenn der Gehalt an enthaltenen Oxidantien drastisch reduziert wird. Dies beweist, dass die Wirkung nicht auf entstandenen Oxidantien beruht, sondern auf der Veränderung der Wasserstruktur.

Von Vorteil ist es weiterhin, wenn der Gehalt an chorhaltigen Oxidantien, Peroxyden und Ozon auf weniger als 20, bevorzugt weniger als 2, besonders bevorzugt weniger als 0,2 und besonders bevorzugt weniger als 0,02 ppm gesenkt wird.

Weiterhin hat es sich vorteilhaft erwiesen, wenn das Trägermedium eine desinfizierende Wirkung gegenüber Bakterien und/oder Bakteriensporen und/oder Pilzen und/oder Pilzsporen und/oder Viren und/oder Algen und/oder Prioren aufweist. Es wird davon ausgegangen, dass diese schädlichen Mikroorganismen eine Störung der Nährstoffzufuhr verursachen können. Eine Bekämpfung dieser Schädlinge verbessert somit die Versorgung der Pflanze mit Nährstoffen.

Weiterhin ist es vom Vorteil, wenn die Verabreichung des Trägermediums mittels Beizen und/oder Sprühen und/oder Injektion und/oder Überziehen und/oder Bestäuben und/oder Eintauchen erfolgt. Insgesamt erfolgt das Beizen in der Art, dass das jeweilige Saatgut bzw. die jeweilige Knolle, welche mit dem Trägermedium behandelt werden soll, in einer üblichen Mischervorrichtung mit dem Trägermedium angebeizt und anschließend getrocknet wird. Damit ergibt sich ein äußerst stabil gebeiztes Saatgut, bzw. ein äußerst stabil gebeiztes Knollengut, welches es den Anforderungen des Herstellers bzw. Endverbraucher entsprechend zusätzlich dadurch angepasst werden kann, dass dem Trägermedium Farbstoffe, Bindemittel oder sonstige Formulierungshilfsmittel zugesetzt werden können. Dabei ist zu beachten, dass bei einer Beizung mit dem Trägermedium gemäß der Erfindung gegenüber einer Beizung mit einer Suspension eventuell geringfügig verlängerte Trocknungszeiten zu beachten sind. Je nach zu behandelter Pflanzenart, kann durch Variationen eine optimale Anpassung an die Bedürfnisse der zu behandelten Pflanzensamen bzw. Knollen oder Jungpflanzen erreicht werden.

Weiterhin ist es von Vorteil, wenn das Verfahren eine fungizide und/oder bakterizide und/oder viruzide und/oder sporozide Wirkung aufweist.

Ferner ist es vom Vorteil, wenn dem Trägermedium Nährsalze und/oder Kunstdünger und/oder Insektizid und/oder Fungizid und/oder Nematizid enthält. Durch eine kombinierte Anwendung des Trägermediums mit den genannten Substanzen kann die Behandlung des Pflanzensamens bzw. der Knolle weiter optimiert werden.

Besonders Vorteilhaft ist es, wenn das Verfahren eine größere Pflanzenhöhe und/oder größere Ausbeute und/oder frühere Reifung und/oder verbesserte Resistenz gegen Trockenheit bewirkt. Auch ist es vom Vorteil, wenn das Verfahren eine frühere Keimung und/oder frühere Frucht und/oder Pflanzenfärbung bewirkt.

In einer weiteren bevorzugten Ausführungsform werden Pflanzensamen und/oder Pflanzen und/oder Knollen und/oder Keimlinge behandelt, wobei das Verfahren ferner das Setzen der mit dem Trägermedium behandelten Pflanzensamen und/oder Pflanzen und/oder Knollen und/oder Keimlingen in natürliche und/oder künstliche Erde und das Züchten von Pflanzen aus den in die erste gesetzten Samen umfasst.

Vom besonderen Vorteil ist die Verwendung des Verfahren bei der Behandlung von Pflanzen ausgewählt aus der Gruppe von Reis, Weizen, Hafer, Roggen, Einkorn, Dinkel, Hartweizen, Karmut, Gerste, Hirse, Sorghum, Teff, Hopfen, Baumwolle, Sonnenblumen, Erdnuss, Mais, Kartoffel, Süßkartoffel, Bohne, Erbse, Chicoree, Kopfsalat, Endiviensalat, Kohl, Blumenkohl, Brokkoli, Kohlrübe, Rettich, Spinat, Zwiebel, Knoblauch, Aubergine, Paprika, Sellerie, Karotte, Turbankürbis, Kürbis, Zucchini, Gurke, Apfel, Birne, Melone, Erdbeere, Weintraube, Himbeere, Ananas, Sojabohne, Tabak, Tomate, Sorghum, Zuckerrohr, Rose, Saintpaulia, Petunie, Pelargonie, Poinsettia, Chrysantheme, Gartennelke, Kakao und Zinnie ausgewählt ist.

Das zur Beizung verwendete Trägermedium dient u.a. zur Bekämpfung des durch Helminthosporium solani verursachten Silberschorfs, von Fusarien (Gattung der Schimmelpilze), durch Phoma exigua verursachte Trockenfäule, oder durch Erwinia carotovora verursachte Schwarzbeinigkeit und insbesondere der Bekämpfung der von Rhizoctonia solani verursachten Wurzeltöterkrankheit.

R. solani gehört zu den wirtschaftlich bedeutenden Krankheitserrregem der Kartoffel. Ein Befall mit R. solani zeigt sich in Fehlstellen, Auflaufverzögerungen und Pflanzen mit verringerter Stengelzahl. Eine befallene Staude zeigt Beeinträchtigungen des Knollenwachstums und der Knollenform. Die Knollenmissbildung ist neben dem Ertragsverlust der wichtigste wirtschaftliche Schaden, zusätzlich kann der Gebrauchswert der Kartoffeln aber noch weiter durch die an der Kartoffelschale haftenden, schwarzbraunen Sklerotien reduziert werden. Knollen, in die Rhizoctonia-Hyphen eingedrungen sind und damit das Krankheitsbild des sog. "dry core" zeigen sind auch als Speisekartoffeln nicht verwertbar.

R. solani, die asexuelle Form der weltweit verbreiteten Pilzart Thanatephorus cucumeris, kann an Kartoffeln oder auch im Boden in Sklerotien ("Pocken", Dauerformen des Pilzes) ungünstige Witterungsbedingungen überdauern und keimt anschließend bei Bedingungen, die denen der Keimung von Kartoffelknollen in etwa entsprechen, erneut aus. Daraus folgt, dass die Ursache der Wurzeltöterkrankheit vor allem aus dem Boden, in die die Pflanzkartoffel gegeben wurde, als auch von der Pflanzkartoffel selbst stammt. Während das Risiko einer bodenbürtigen Infektion beispielsweise durch eine geordnete Fruchtfolge oder durch die Minimierung des Humusanteils in der Ackerkrume reduziert werden kann, begegnet man der Infektionsgefahr durch bzw. auf dem Pflanzgut mit einer Behandlung dessen, der Beizung.

Weiterhin wird die Aufgabe gelöst durch ein Saatgut und/oder eine Knolle, welche mit einem Verfahren gemäß der Erfindung behandelt wurde. Dieses Saatgut bzw. diese Knolle zeichnet sich dadurch aus, das deutlich weniger Fäulnisse, Krankheiten zu beobachten sind, was den Verlust an Saatgut bzw. an Knollen reduziert, und dabei hinaus die Keimgeschwindigkeit beschleunigt wird, und die Pflanzen insgesamt ein verbessertes Wachstum aufweisen.

Ferner umfasst die Erfindung ein Mittel zur Beizung von Pflanzen und/oder Samen und/oder Knollen und/oder Keimlingen, welche nach einem Verfahren gemäß der Erfindung hergestellt wird. Dies Mittel kann kostengünstig und umweltfreundlich hergestellt werden, ohne Qualitätsverluste in längerer Zeit gelagert werden, und dann zur Behandlung eingesetzt werden.

Schließlich ist es vom großen Vorteil, wenn das Verfahren zur Beizung von Schnittkartoffelsaatgut und/oder Stecklingen verschiedener Pflanzen eingesetzt wird. Im Stand der Technik kann geschnittenes Kartoffelsaatgut zum Schutze gegen Bodenfäulnis erst nach erfolgter Vemarbung der Schnittfläche ausgelegt werden. Zur Beschleunigung der Vemarbung werden bevorzugt Asche, Gips oder ähnliche Stoffe eingesetzt. Aufgrund ihrer geringfügigen Haftflächtigkeit auf der Schnittfläche bewirken diese Stoffe nur eine unvollkommene Vernarbung. Auch weisen sie wenig oder überhaupt keine desinfizierende Wirkung auf, so dass bei diesen eingesetzten Substanzen kein ausreichender Schutz der Schnittfläche gegen das Eindringen von Fäulniserregern gewährleistet wird. Wird hingegen ein Trägermedium gemäß der Erfindung eingesetzt, wird die Oberfläche der Schnittkartoffeln mit einem Überzug versehen, der monatelang die Schnittfläche gegen das Eindringen jeglicher Bodenschädlinge schützt. Diese Wirkung kann gegebenenfalls durch einen Zusatz weiterer Stoffe verstärkt werden. Der Einsatz des erfindungsgemäßen Verfahrens wirkt insofern besonders vorteilhaft, als dass die Verluste an Saatgut bzw. Knollen reduziert werden können, weshalb an Saatgut bzw. Knollen gespart werden kann. Es bewirkt aber auch, dass die Feldbestellung in Folge der in wenigen Minuten erfolgten Vernarbung der Schnittfläche keinen Aufschub erleidet.

Eine weitere vorteilhafte Anwendung des Verfahrens gemäß der Erfindung liegt darin, Lagerkisten, in den Obst oder Gemüse gelagert wird, mit einem Trägermedium zu behandeln, welches durch ein Influenzverfahren gewonnen wurde. dadurch können Infektionen, die von Lagerkisten oder anderen Behältnissen auf Obst oder Gemüse übertragen werden, verhindert werden. Die Behandlung kann beispielsweise mittels eines Sprühnebels oder durch Eintauchen erfolgen.

Eine weitere vorteilhafte Anwendung des Verfahrens gemäß der Erfindung liegt darin, Oberflächen von Gemüse, beispielsweise Kartoffeln, bei der Einlagerung zu desinfizieren, während sie über ein oder mehrere Förderbänder laufen.

Darüber hinaus hat es sich als vorteilhaft erwiesen, das Trägermedium, das durch ein Influenzverfahren gewonnen wurde, auf speziellen Rodem einzusetzen, die die Oberflächen des Gemüses, insbesondre Kartoffeln, während der Ernte desinfizieren.

Die praktische Umsetzung der Erfindung sowie deren Vorteil in der Praxis werden durch die nachfolgenden Ausführungsbeispiele veranschaulicht.

### Beispiel 1: In-vivo-Test an Rhizoctonia solani (Wurzeltöterkrankheit):

In einem Freilandversuch wurde die Verwendung influenzbehandelten Trägermediums zur Bekämpfung von Rhizoctonia solani (Wurzeltöterkrankheit) an Kartoffeln untersucht.

Dazu wurden Pflanzkartoffeln der Sorte "Victoria" vor dem Legen mit mittels Influenzverfahren behandeltem Wasser gebeizt. Nach der Ernte wurden die Knollen aus Parzellen mit den mittels Influenzverfahren behandelten Pflanzkartoffeln mit solchen aus Parzellen mit ungebeizten Pflanzkartoffeln verglichen.

Es zeigte sich, dass die Kartoffeln aus den influenzgebeizten Parzellen zu 68 % R. solani-befallsfrei waren, wohingegen lediglich 8 % der Kartoffeln aus den unbehandelten Parzellen nicht befallen waren.

### Beispiel 2: Test an Wintergerste und Winterweizen

Saatgut von Wintergerste und Winterweizen wurden jeweils mit mittels Influenzverfahren gewonnener Flüssigkeit gebeizt und anschließend getrocknet. Das so gebeizte Saatgut wurde auf 1,5 bzw. 2,5 Hektar großen Anbauflächen ausgebracht, wobei als Vergleich ungebeiztes Saatgut und mit einer Standardbeizung versehenes Saatgut verwendet wurde.

Ergebnis: Erfindungsgemäße gebeizte Wintergerste bzw. Winterweizen zeigten gegenüber dem mit Standardbeize versehenem Saatgut, bzw. ungebeiztem Saatgut eine signifikante verbesserte Auflaufverzögerung von zirka 4 Tagen gegenüber mit Standardbeizung versehenem Saatgut und 7 Tagen gegenüber ungebeiztem Saatgut.

Nach zirka 6 Monaten bei gleichzeitiger Überwinterung war bei dem erfindungsgemäßen behandelten Saatgut eine signifikant verstärkte Wurzelbildung zu beobachten, wobei insbesondere die Feinwurzelhaarbehandlung ausnahmslos stärker entwickelt war. Das Auswuchsverhalten des erfindungsgemäß behandelten Saatguts war gegenüber den unbehandelten sowie aus den standardgebeizten Saatgutgruppen erheblich besser, dies hat sich insbesondere vor allem in der Auflaufphase und der Anfangsphase der Biomassebindung gezeigt. Hinsichtlich des Ertrages waren die erfindungsgemäß behandelten Pflanzen gegenüber den Pflanzen aus ungebeiztem Saatgut bzw. aus Saatgut mit Standardbeizen um 2,5 bis ca. 12,5 % besser.

Generell war bei Pflanzen, die gemäß der Erfindung behandelt wurden, eine ausgeprägte Vitalität festzustellen.

### Beispiel 3: Keimhemmung an Kartoffeln in einem Lagerversuch bei Bewertung der Keimzahl und Keimmasse.

Kartoffelknollen der Sorte "Adretta" wurden in Nassbeizverfahren nach der Ernte (20.09.2009) mit einem Trägermedium gemäß der Erfindung behandelt. Zur Auswertung wurden an drei Terminen (10.04., 06.05. und 13.05.2010), die Anzahl der Keime und die Keimmasse bestimmt. Dabei wird die Anzahl der Keime bzw. die Keimmasse der unbehandelten Kontrolle jeweils als 100% definiert.

Am 10.04. weist die mit dem Trägermedium behandelte Gruppe 18% der Keime der unbehandelten Gruppe auf, bzw. 1,3% der Keimmasse.
Am 06.05. weist die behandelte Gruppe 71% der Anzahl der Keime der Kontrollgruppe bzw. 1,0% der Keimmasse der Kontrollgruppe auf.
Am 13.05 weist die behandelte Gruppe 78% der Anzahl der Keime der unbehandelten Kontrollgruppe sowie 1,4% der Keimmasse der unbehandelten Kontrollgruppe auf.

### Beispiel 3: Förderung der Wundvernarbung an der Kartoffelknolle bei Bewertung der Peridermschichtenbildung.

Zur Versuchsdurchführung wird ein Trägermedium gemäß der Erfindung auf verletzte Kartoffelknollen der Sorte "Adretta" im Beizverfahren aufgebracht und die Kartoffelknollen bis zur Versuchsauswertung bei 15° Celsius bzw. 20 Grad Celsius und 80% relativer Luftfeuchtigkeit gelagert. Die Versuchsauswertung erfolgt nach 10 und 15 Tagen durch Ermittlung der Anzahl neu gebildeter Peridermschichten.

Durch Behandlung wurde die Anzahl neu gebildeter Peridermschichten deutlich erhöht.

So betrug die Zahl der neugebildeten Peridermschichten in der Gruppe, die bei 15 Grad gelagert wurde, nach 10 Tagen 4,0 gegenüber 2,8 Peridermschichten und nach 15 Tagen 6,6 gegenüber 4,3 neu gebildeten Peridermschichten der Kontrollgruppe.

Bei der Gruppe, die bei 20 Grad gelagert wurde, betrug die Zahl der neugebildeten Peridermschichten nach 10 Tagen 5,3 gegenüber 3,9 der Kontrollgruppe und nach 15 Tagen 8,2 gegenüber 7,2 der Kontrollgruppe.

### Beispiel 4: Ertragssteigerung durch Influenzbeizung

Die Wirkungen einer Influenzbehandlung auf die Erträge wurden ebenfalls untersucht. Dazu wurde das Gewicht pro Knolle bzw. pro Staude (Kartoffeln pro Staude) bestimmt.

Dabei zeigte sich, dass das Durchschnittsgewicht pro Knolle in der Kontrollgruppe 95 g und in der gemäß der Erfindung behandelten Gruppe 116 g betrug.

Das Erntegewicht pro Staude betrug in der Kontrollgruppe 1,19 Kg und in der gemäß der Erfindung behandelten Gruppe1,32 Kg. Davon waren in der Kontrollgruppe 0,96 Kg Marktware und in der behandelten Gruppe 1,15 Kg Marktware. Aufgrund einer zu geringen Größe waren 0,23 Kg bei der Kontrollgruppe Ausschuss gegenüber 0,17 Kg bei der behandelten Gruppe.

Die nachfolgenden Figuren veranschaulichen die Vorzüge und Eigenschaften der Erfindung. Darin zeigen:
- Figur 1: den Vergleich einer Behandlung mit Kupferlösung gegenüber Behandlung mit Influenzverfahren;
- Figur 2: den Vergleich der Wirkungen einer Behandlung mit Kupferlösung gegenüber Behandlung mit Influenzverfahren auf die Wurzeltöterkrankheit;
- Figur 3: die Wirkung des Trägermediums auf mit Krautfäule infizierte Frühkartoffeln;
- Figur 4: die Wirkung des Trägermediums auf mit der Wurzeltöterkrankheit infizierte Frühkartoffeln;
- Figur 5: die Wirkung des Trägermediums auf das Erntegewicht von Kartoffeln;
- Figur 6: die Wirkung des Trägermediums auf mit der Wurzeltöterkrankheit infizierte Spätkartoffeln;
- Figur 7: die Wirkung des Trägermediums auf das Erntegewicht von Spätkartoffeln; sowie
- Figur 8: die Wirkung des Trägermediums auf das Erntegewicht von Spätkartoffeln.

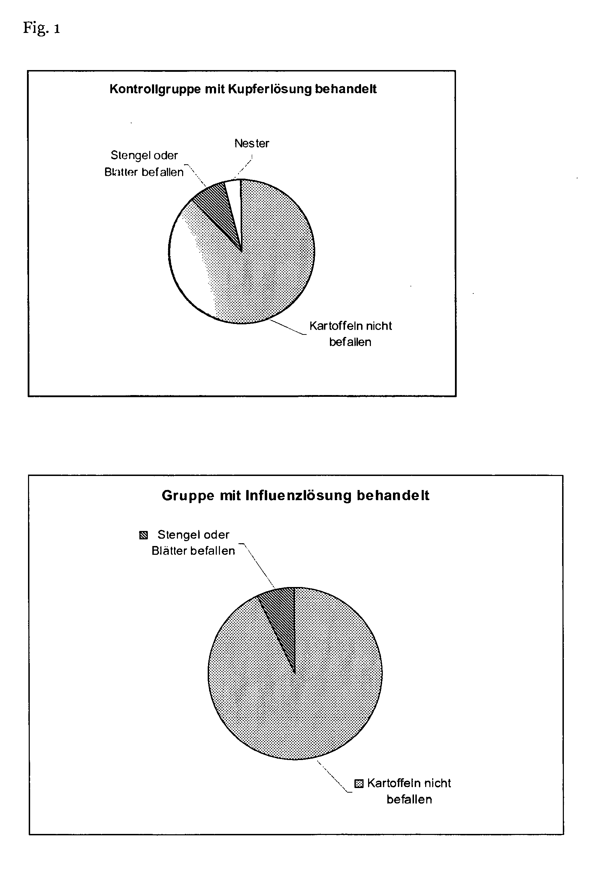

### Figur 1: Vergleich einer Behandlung mit Kupferlösung gegenüber Behandlung mit Influenzverfahren

Zwei Kartoffelfelder wurden bezüglich des Auftretens von Krautfäule untersucht. Die Kontrollgruppe wurde mit einer konventionellen Kupferlösung behandelt, die zweite Gruppe wurde mit einer mittels Influenzverfahren gewonnen Flüssigkeit gemäß der Erfindung behandelt.

Bei der Kontrollgruppe waren 8% der Blätter oder Stengel befallen, weitere 4% wiesen Nester auf. Bei der mit einer Influenzlösung behandelten Gruppe waren 7% der Stengel oder Blätter befallen; diese Gruppe wies keine Nester auf.

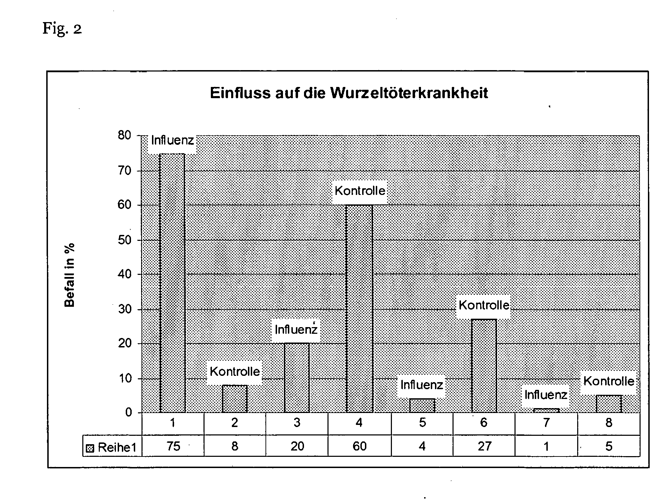

### Figur 2: Vergleich der Wirkungen einer Behandlung mit Kupferlösung gegenüber Behandlung mit Influenzverfahren auf die Wurzeltöterkrankheit

Zwei Kartoffelfelder wurden bezüglich des Auftretens der Wurzeltöterkrankheit untersucht. Die Kontrollgruppe wurde mit einer konventionellen Kupferlösung behandelt, die Versuchsgruppe mit einer mittels Influenzverfahren gewonnen Flüssigkeit gemäß der Erfindung.

Säulen 1 und 2 stellen die befallsfreien Anteile dar; hier war die Influenzbehandlung der Kupferbehandlung deutlich überlegen (75% in der Influenzgruppe befallsfrei gegenüber 8% in der Kontrollgruppe).

Säulen 3 und 4 stellen die Anteile mit leichtem Befall dar (20% in der Influenzgruppe gegenüber 60% in der Kontrollgruppe).

Säulen 5 und 6 stellen die Anteile mit mittlerem Befall dar (4% in der Influenzgruppe gegenüber 27% in der Kontrollgruppe).

Säulen 7 und 8 stellen die Anteile mit starkem Befall dar (1% in der Influenzgruppe gegenüber 5% in der Kontrollgruppe).

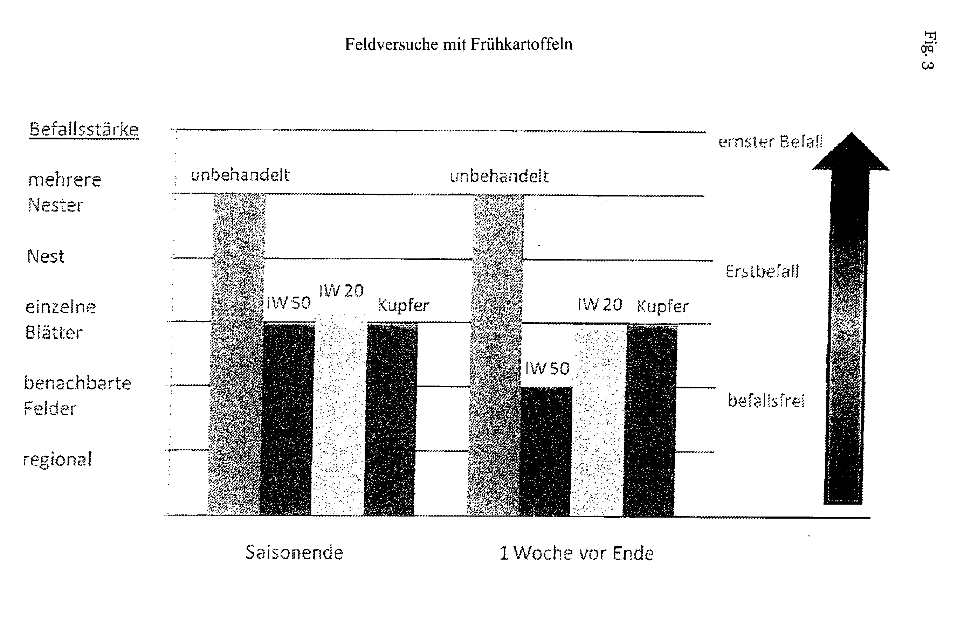

Figur 3 zeigt die Wirkung des Trägermediums auf mit Krautfäule infizierte Frühkartoffeln. In den Versuchen war der Infektionsdruck sehr hoch. Die mit Trägermedium behandelten Parzellen blieben bis zum Ende der Saison nahezu befallfrei. In der mit Kupfer behandelten Parzelle trat der erste leichte Befall 1 Woche früher auf als in der mit Trägermedium behandelten Parzelle. Die Behandlung mit Trägermedium hat unter hohem Infektionsdruck Ertrags- und Qualitätsverluste durch Krautfäule vollständig verhindert.

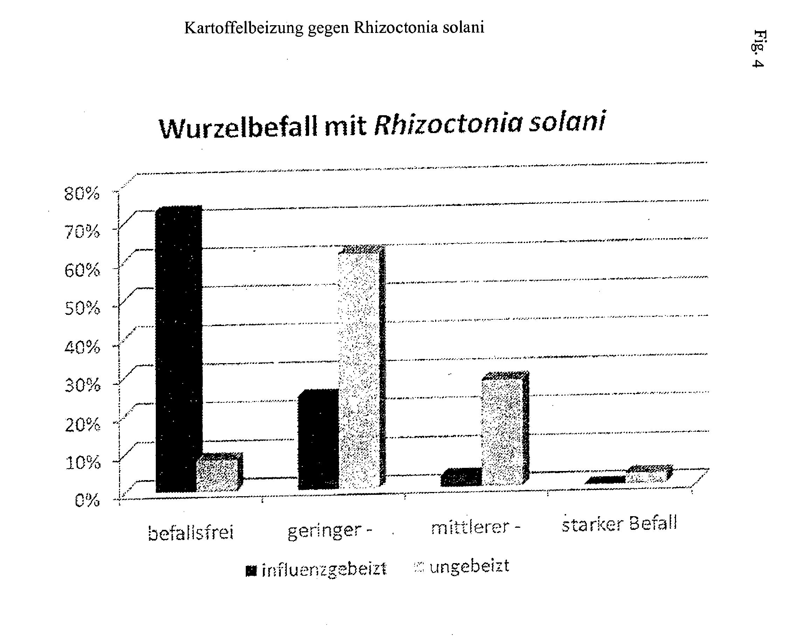

Figur 4 veranschaulicht die Wirkung des Trägermediums auf mit der Wurzeltöterkrankheit infizierte Frühkartoffeln. Durch die Behandlung mit dem Trägermedium konnten über 70% der Stauden befallsfrei gehalten werden. Der Anteil an befallsfreien unbehandelten Stauden betrug nur ca. 7%.

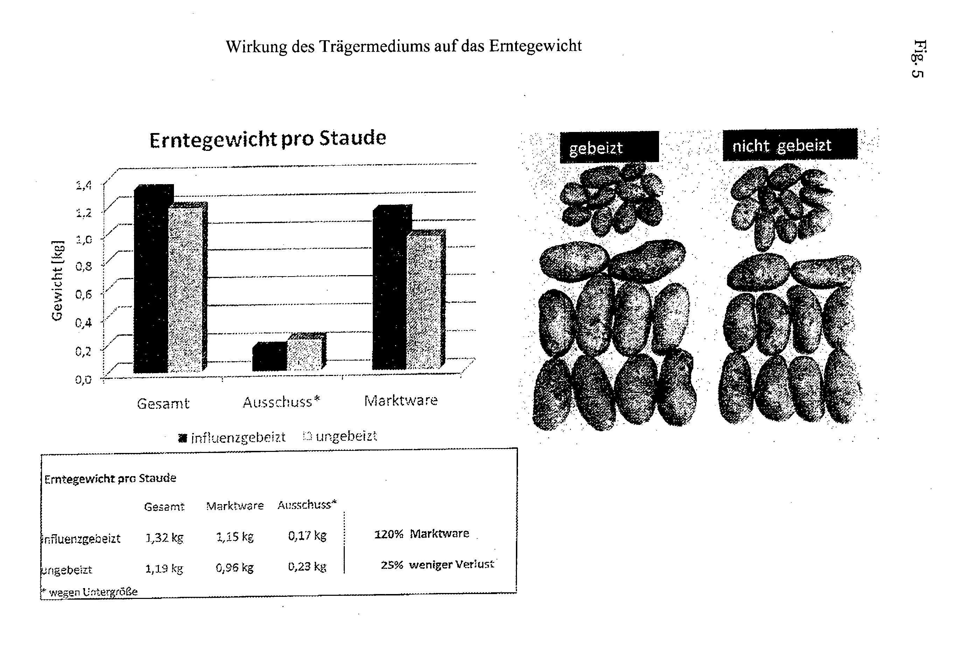

Figur 5 zeigt die Wirkung des Trägermediums auf das Erntegewicht von Kartoffeln. Die Säulen zeigen das Erntegewicht je Staude. Der Anteil der marktfähigen Ware wurde durch das Influenzbeizen deutlich erhöht, während der Anteil des Ausschusses deutlich verringert wurde.

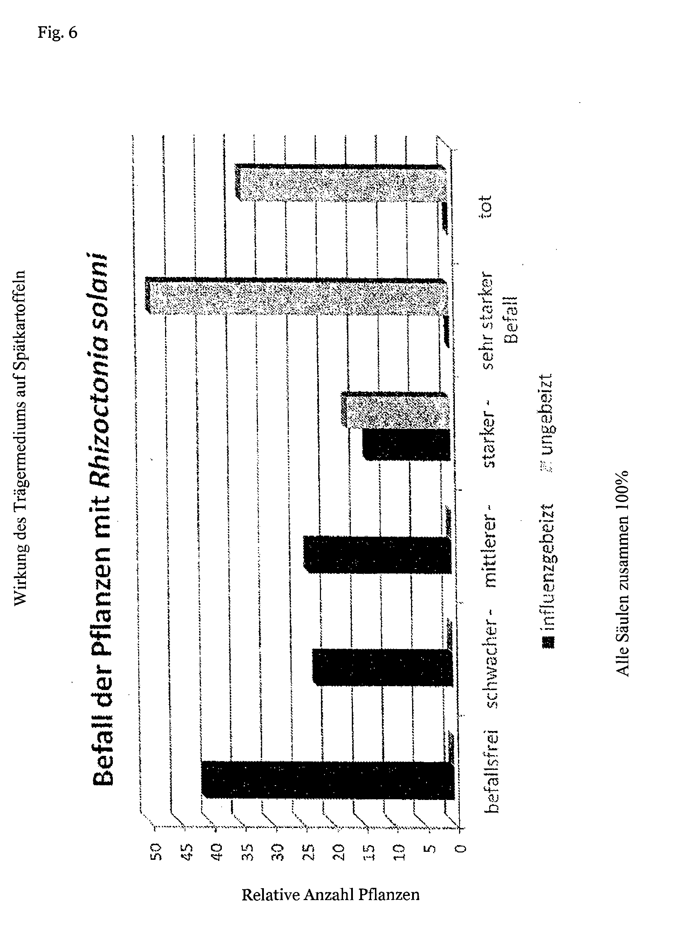

Figur 6 zeigt die Wirkung des Trägermediums auf mit der Wurzeltöterkrankheit infizierte Spätkartoffeln. Dabei führte stark belastetes Pflanzgut auf dem Feld zu hohem Befallsdruck an den Stauden. Die Behandlung mit Trägermedium verringerte den Praxisbefall signifikant.

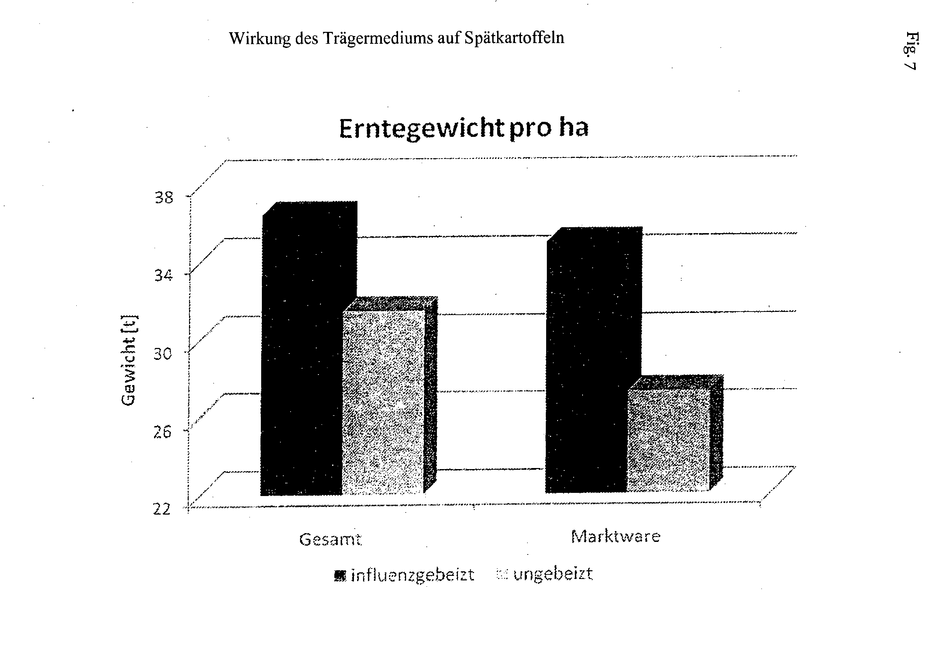

Figur 7 veranschaulicht die Wirkung des Trägermediums auf das Erntegewicht von Spätkartoffeln. Durch die Behandlung mit dem Trägermedium kam es dabei zu einem Mehrertrag vermarktbarer Ware von 30%. Darüber hinaus führte die Beizung zu einer Reduzierung der Ausschussware um mehr als 60%.

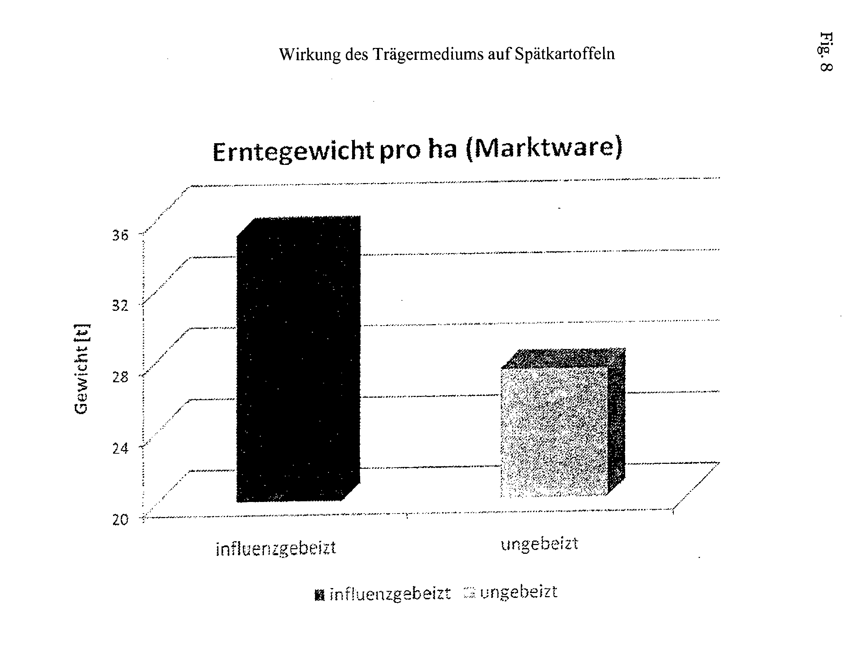

Figur 8 zeigt die Wirkung des Trägermediums auf das Erntegewicht von Spätkartoffeln. Durch die Beizung mit Trägermedium konnten die gebeizten Stauden pro Hektar 7,7 t mehr marktfähige Kartoffeln bilden.

Die Daten zeigen in anschaulicher Weise die Vorzüge der Erfindung.

Die vorliegende Erfindung stellt ein Verfahren zur Behandlung von Pflanzen zur Verfügung, das auf wirtschaftliche und umweltfreundliche Weise einen effektiven Pflanzenschutz bewirkt und zu erheblichen Ertragssteigerungen beiträgt.

## Patentansprüche

1. Verfahren zur Verstärkung des Wachstums und zur Abtötung von Krankheitserregern bei Pflanzen, wobei das Verfahren die Beaufschlagung eines Trägermediums auf Pflanzen und/oder Samen und/oder Knollen und/oder Keimlingen umfasst, das Trägermedium mittels eines Influenzverfahrens erhältlich ist, welches die folgenden Schritte umfasst:
Einbringen des zu behandelnden Wassers in eine elektrisch beaufschlagte Zelle,
Ausrichtung der Ladungen und freien Elektronen im elektrischen Feld, Trennung der Ladungen durch Bewegung und der daraus resultierender Influenz und
Sammlung und Abführung der de-elektronisierten, positiv oder negativ geladenen Fraktion, **dadurch gekennzeichnet, dass** negativ geladenes Trägermedium oder eine Mischung von positiv und negativ geladenem Trägermedium beaufschlagt werden, oder in der Abfolge zunächst positiv geladenes Trägermedium, danach negatives und umgekehrt.

2. Verfahren nach Anspruch 1, **dadurch gekennzeichnet, dass** die Behandlung mittels einer Beizung erfolgt.

3. Verfahren nach einem der vorhergehenden Ansprüche, **dadurch gekennzeichnet, dass** das positiv geladene Trägermedium eine Gesamtkonzentration an entstandenen Oxidantien von kleiner als 180, bevorzugt kleiner als 100, besonders bevorzugt kleiner als 50 und insbesondere bevorzugt kleiner als 30 ppm aufweist, und dass das negativ geladene Trägermedium eine Konzentration an Natriumhydroxid zwischen 5 und 500 ppm, einen pH-Wert zwischen 9 und 12 und ein Elektronenübertragungspotential von -800 +/- 300 mV aufweist.

4. Verfahren nach einem der vorhergehenden Ansprüche, **dadurch gekennzeichnet, dass** die Beaufschlagung des Trägermediums mittels Beizen und/oder Sprühen und/oder Injektion und/oder Überziehen und/oder Bestäuben und/oder Eintauchen erfolgt.

5. Verfahren nach einem der vorhergehenden Ansprüche, **dadurch gekennzeichnet, dass** der Effekt und/oder die Wirkung des Trägermediums durch Behandlung mit Röntgenstrahlung auslöschbar ist.

6. Verfahren nach einem der vorhergehenden Ansprüche, **dadurch gekennzeichnet, dass** das Verfahren eine fungizide und/oder bakterizide und/oder viruzide und/oder sporozide Wirkung aufweist.

7. Verfahren nach einem der vorhergehenden Ansprüche, **dadurch gekennzeichnet, dass** das Trägermedium ferner Nährsalze und/oder Kunstdünger und/oder Insektizid und/oder Fungizid und/oder Nematizid enthält.

8. Verfahren nach einem der vorhergehenden Ansprüche, **dadurch gekennzeichnet, dass** das Verfahren eine größere Pflanzenhöhe und/oder größere Ausbeute und/oder frühere Reifung und/oder verbesserte Resistenz gegen Trockenheit bewirkt.

9. Verfahren nach einem der vorhergehenden Ansprüche, **dadurch gekennzeichnet, dass** das Verfahren eine frühere Keimung und/oder frühere Frucht und/oder Pflanzenfärbung bewirkt.

10. Verfahren nach einem der vorhergehenden Ansprüche, **dadurch gekennzeichnet, dass** Pflanzensamen und/oder Pflanzen und/oder Knollen und/oder Keimlingen behandelt werden, um die Keimung zu erhöhen, wobei das Verfahren ferner das Setzen der mit dem Trägermedium behandelten Pflanzensamen und/oder Pflanzen und/oder Knollen und/oder Keimlingen in natürliche und/oder künstliche Erde und das Züchten von Pflanzen aus den in die Erde gesetzten Samen umfasst.

11. Verfahren nach einem der vorhergehenden Ansprüche, **dadurch gekennzeichnet, dass** die Pflanze aus der Gruppe von Reis, Weizen, Hafer, Roggen, Einkorn, Dinkel, Hartweizen, Karmut, Gerste, Hirse, Sorghum, Teff, Hopfen, Baumwolle, Sonnenblumen, Erdnuss, Mais, Kartoffel, Süßkartoffel, Bohne, Erbse, Chicoree, Kopfsalat, Endiviensalat, Kohl, Blumenkohl, Brokkoli, Kohlrübe, Rettich, Spinat, Zwiebel, Knoblauch, Aubergine, Paprika, Sellerie, Karotte, Turbankürbis, Kürbis, Zucchini, Gurke, Apfel, Birne, Melone, Erdbeere, Weintraube, Himbeere, Ananas, Sojabohne, Tabak, Tomate, Sorghum, Zuckerrohr, Rose, Saintpaulia, Petunie, Pelargonie, Poinsettia, Chrysantheme, Gartennelke, Kakao und Zinnie ausgewählt ist.

12. Saatgut und/oder Knolle, **dadurch gekennzeichnet, dass** es mit einem Verfahren nach einem der vorhergehenden Patentansprüche behandelt wurde.

13. Mittel zur Beizung von Pflanzen und/oder Samen und/oder Knollen und/oder Keimlingen, erhältlich nach einem Verfahren gemäß einem der Patentansprüche 1 bis 11.

14. Verfahren zur Beizung von Schnittkartoffelsaatgut und/oder Stecklingen verschiedener Pflanzen, **gekennzeichnet durch** ein Verfahren nach einem der Patentansprüche 1 bis 11.

## Claims

1. A method of enhancing growth and killing of pathogens in plants, wherein the process includes the application of a carrier medium on plants and / or seeds and / or tubers and / or seedlings, the carrier medium being obtainable by means of an electric influence process, comprising the following steps:
placing the water to be treated in an electrically-powered cell,
alignment of the charges and free electrons in the electric field,
separation of the charges by motion and the resulting Electrostatic induction,
and collection and remittance of de-electronised, positively or negatively charged fraction,
**characterized in that** negatively charged carrier medium or a mixture of positively and negatively charged carrier medium is applied, or a sequence of firstly positively charged carrier medium, then negatively and vice versa.

2. Method according to claim 1, **characterized in that** the treatment is carried out by means of a Seed treatment.

3. Method according to one of the preceding claims, **characterized in that** the positively charged carrier medium has a total concentration of orgonated oxidants of less than 180, preferably less than 100, more preferably less than 50 and most preferably less than 30 ppm, and **in that** the negatively charged carrier medium has a concentration of sodium hydroxide between 5 and 500 ppm, a pH value between 9 and 12 and an electron transfer potential of -800 +/- 300 mV.

4. Method according to one of the preceding claims, **characterized in that** the application of the carrier medium is done by means of seed treatment and / or spraying and / or injection and / or coating and / or dusting and / or dipping.

5. Method according to one of the preceding claims, **characterized in that** the result and / or the effect of the carrier medium is erasable by treatment with X-ray radiation.

6. Method according to one of the preceding claims, **characterized in that** the method provides a fungicidal and / or bactericidal and / or virucidal and / or sporocidal effect.

7. Method according to one of the preceding claims, **characterized in that** the carrier medium further comprises nutrient salts and / or fertilizer and / or insecticide and / or fungicide and / or nematicide.

8. Method according to one of the preceding claims, **characterized in that** the method causes a larger plant height and / or larger yield and / or earlier maturation and / or improved resistance to drought.

9. Method according to one of the preceding claims, **characterized in that** the method causes an earlier germination and / or earlier fruit and / or vegetable color.

10. Method according to one of the preceding claims, **characterized in that** plant seeds and / or plants and / or tubers and / or seedlings are treated in order to increase the germination, said method further comprising setting the plant seeds and / or plants and / or tubers and / or seedlings treated with the carrier medium in natural and / or artificial soil and growing plants from the seeds set in the earth.

11. Method according to one of the preceding claims, **characterized in that** the plant is selected from the group consisting of rice, wheat, oats, rye, einkorn, spelt, durum wheat, Karmut, barley, millet, sorghum, teff, hops, cotton, sunflower, peanut, corn , potato, sweet potato, bean, pea, chicory, lettuce, endive, cabbage, cauliflower, broccoli, turnip, radish, spinach, onion, garlic, eggplant, peppers, celery, carrot, Turban squash, pumpkin, zucchini, cucumber, apple, pear, melon, strawberry, grape, raspberry, pineapple, soybean, tobacco, tomato, sorghum, sugarcane, rose, Saintpaulia, petunia, pelargonium, poinsettia, chrysanthemum, carnation, cocoa and zinnia.

12. Seed and / or tuber, **characterized in that** it has been treated with a method according to any one of the preceding claims.

13. Means for treating plants and / or seeds and / or tubers, and / or seedlings, obtainable by a process according to one of the claims 1 to 11.

14. A method for treating potato seeds and / or seedlings of various plants, **characterized by** a method according to any one of the claims 1 to 11.

## Revendications

1. Procédé d'amélioration de la croissance et de la destruction des pathogènes dans des plantes, ledit procédé comprenant l'application d'un matériel porteur sur des plantes et / ou des graines et / ou de tubercules et / ou des semis, le matériel porteur est obtenable par un procès d'influence électrique, comprenant les étapes suivantes:
le placement de l'eau à traiter dans une cellule électriquement alimenté,
l'alignement des charges et des électrons libres dans le champ électrique,
la séparation des charges par le mouvement et l'influence résultant et
la collecte et la remise de la fraction de-électronisée chargé positivement ou négativement,
**caractérisé en ce que** un matériel porteur chargé négativement, ou un mélange de matériel porteur chargé positivement et négativement est appliqué, ou en séquence d'abord un matériel porteur chargé positivement et après négativement ou inversement.

2. Procédé selon la revendication 1, **caractérisé en ce que** le traitement est effectué au moyen d'un traitement des graines.

3. Procédé selon l'une des revendications précédentes, **caractérisé en ce que** le matériel porteur chargé positivement a une concentration totale d'oxydants résultants inférieure à 180, de préférence inférieure à 100, de particulière préférence inférieure à 50 et de manière encore inférieure à 30 ppm davantage préférée inférieure à 30 ppm, et **en ce que** le moyen porteur chargé négativement a une concentration totale de hydroxyde de sodium entre 5 et 500 ppm, une valeur de pH comprise entre 9 et 12 et un potentiel de transfert d'électrons de -800 +/-300 mV.

4. Procédé selon l'une des revendications précédentes, **caractérisé en ce que** l'application du matériel porteur se fait au moyen d'un traitement et / ou pulvérisation et / ou d'injection et / ou de revêtement et / ou de poudrage et / ou immersion.

5. Procédé selon l'une des revendications précédentes, **caractérisé en ce que** l'effet et / ou l'action du milieu de support est effaçable par traitement avec un rayonnement de rayons X.

6. Procédé selon l'une des revendications précédentes, **caractérisé en ce que** le procédé comprend un effet fongicide et / ou effet bactéricide et / ou virucide et / ou sporicide.

7. Procédé selon l'une des revendications précédentes, **caractérisé en ce que** le matériel porteur comprend en outre des sels nutritifs et / ou des engrais chimiques et / ou un insecticide et / ou un fongicide et / ou un nématicide.

8. Procédé selon l'une des revendications précédentes, **caractérisé en ce que** le procédé provoque une plus grande hauteur de la plante et / ou plus grand rendement et / ou une maturation plus précoce et / ou une résistance améliorée à la sécheresse.

9. Procédé selon l'une des revendications précédentes, **caractérisé en ce que** le procédé provoque une germination plus précoce et / ou des fruits plus tôt et / ou la coloration des plantes.

10. Procédé selon l'une des revendications précédentes, **caractérisé en ce que** des graines de plantes et / ou plantes et / ou des tubercules et / ou des semis sont traités en vue d'augmenter la germination, ledit procédé comprenant en outre le repiquage des graines de plantes et / ou plantes et / ou tubercules et / ou des semis traités avec le milieu porteur dans le sol naturel et / ou artificiel et la croissance des plantes à partir des graines repiqués dans la terre.

11. Procédé selon l'une des revendications précédentes, **caractérisé en ce que** la plante est choisie dans le groupe constitué par le riz, blé, avoine, seigle, engrain, épeautre, blé dur, Karmut, orge, millet, sorgho, teff, houblon, coton, tournesol, arachide, maïs, pomme de terre, patate douce, haricot, pois, chicorée, laitue, endive, chou, chou-fleur, brocoli, navet, radis, épinards, oignon, ail, aubergine, poivrons, céleri, carotte, courge Turban, courge, courgettes, concombre, pomme, poire , melon, fraise, raisin, framboise, ananas, soja, tabac, tomate, sorgho, canne à sucre, rose, Saintpaulia, pétunia, pélargonium, poinsettia, chrysanthème, oeillet, cacao et zinnia.

12. Semences et / ou les tubercules, **caractérisé en ce que** elles ont été traitées avec un procédé selon l'une quelconque des revendications précédentes.

13. Moyens pour le traitement des plantes et / ou graines et / ou tubercules et / ou semis, obtenable par un procédé selon l'une quelconque des revendications 1 à 11.

14. Procédé pour le traitement des semences de pomme de terre et / ou des boutures de diverses plantes, **caractérisé par** un procédé selon l'une quelconque des revendications 1 à 11.
